## Europäisches Patentamt
## European Patent Office
## Office européen des brevets

(19)

(11) Publication number: **0 155 022**
**B1**

(12) **EUROPEAN PATENT SPECIFICATION**

(45) Date of publication of patent specification: **11.05.88**

(51) Int. Cl.⁴: **B 09 B 5/00, F 23 G 5/027**

(21) Application number: **85200152.8**

(22) Date of filing: **08.02.85**

(54) **Process and apparatus for cleansing soil polluted with toxic substances.**

(30) Priority: **29.02.84 NL 8400652**

(43) Date of publication of application:
**18.09.85 Bulletin 85/38**

(45) Publication of the grant of the patent:
**11.05.88 Bulletin 88/19**

(84) Designated Contracting States:
**AT BE CH DE FR GB LI LU NL SE**

(56) References cited:
**DE-A-3 122 395**
**DE-A-3 216 771**
**DE-B-1 247 532**
**FR-A-1 425 223**
**FR-A-2 361 606**
**FR-A-2 369 505**

(73) Proprietor: **ECOTECHNIEK B.V.**
**Beneluxlaan 9 P.O. Box 8447**
**NL-3503 RK Utrecht (NL)**

(72) Inventor: **Reintjes, Rudolf Carlo**
**G. van Seystlaan 1**
**NL-3703 BR Zeist (NL)**

(74) Representative: **van der Beek, George Frans**
**et al**
**Nederlandsch Octrooibureau Johan de Wittlaan**
**15 P.O. Box 29720**
**NL-2502 LS 's-Gravenhage (NL)**

EP 0 155 022 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

# Description

The invention relates to a process exclusively for cleaning soil polluted with toxic substances by heating said soil in a first treatment kiln of the rotary type to a temperature which is high enough to evaporate at least part of the toxic substances, however, such that pyrolysis is substantially avoided the resultant vapours subsequently being burnt in a second kiln, whilst the heat energy fed into the second kiln and obtained during the after-burning process in said second kiln is used by heat exchange for preheating the cold soil fed into the first kiln as well as for preheating the combusion air fed into the kilns, while the soil leaving the first kiln can be cooled and conditioned, in particular moistened. The invention also relates to apparatus for carrying out such a process.

Such a process is known from DE—A—3216771. According to said known process polluted soil from which water has been drained as far as necessary, is fed into a rotary kiln through which hot gases from a burner are conducted in countercurrent to the direction of movement of the soil through said kiln. During this process the soil is heated to about 250°C as a result of which part of the contaminant present in said soil evaporates. The soil leaving the rotary kiln is subsequently cooled and rendered reusable by moistening said soil and, if necessary, by adding fertilisers.

In the known process the vapours or gases leaving said soil in the rotary kiln are fed into a second kiln in which they are burned to transfer the combustible components into completely burned gases and to transfer toxic gases into non-toxic gases. The combustion gases which leave said second kiln are used through heat exchange for preheating the cold soil fed into the first kiln and subsequently for preheating the combustion air for the burner or burners.

In the apparatus known from said publication the heat exchange takes place in an indirect manner through the fact that said combustion gases flow through a jacket and pipe system of the rotary kiln.

This known process is technically and economically feasible and is satisfactory in many cases.

However, in case the polluted soil does, as more and more happens, have contaminants which do not evaporate satisfactorily or at all at 250°C and which therefore remain in the soil if said known process is applied, then the soil leaving the apparatus at the end of the process still must be regarded as being polluted.

If the polluted soil were to be heated to a higher temperature in the same rotary kiln, this would cost a great deal of energy which is not recovered, while the yield from the recovery of energy from the flue gases of the second kiln would be greatly reduced. The known process and apparatus are therefore not suitable for cleaning soil containing toxic substances for the removal of which a much higher temperature is required.

The object of the invention is now to provide a process and apparatus in which this is economically possible.

This object according to the invention is according to a first aspect achieved in that soil leaving the first kiln after treatment therein is taken to the second kiln within which said soil is heated to a considerably higher temperature, partly by using the combustion heat by after-burning the vapours leaving the first kiln and that the soil treated in this second kiln is taken to the first kiln at a location such that the temperature of the soil in this first kiln by being mixed with the soil of higher temperature fed into the first kiln after treatment in the second kiln, is raised to the temperature required in the said first kiln to evaporate the toxic substances present in the freshly introduced polluted soil.

In this way the already preheated soil leaving the rotary kiln can be heated in the second kiln to the much higher temperature of say 800 to 1000°C with the aid of additional energy and as far as present the energy in the combustion heat of the vapours and gases which leave the first kiln. The recovery of energy then is further increased by the fact that the soil highly heated in the said second kiln is returned into the first kiln at a suitable point which lies somewhere between the beginning and the end of the rotary kiln, depending on the extent to which the cold soil has already been preheated by the gases leaving the second kiln and flowing through the jacket and pipe system of the rotary kiln. Soil having a high temperature and completely cleaned is mixed in said first kiln with the still polluted soil which mixing is intensive by the fact that said first kiln is a rotary kiln. In said rotary kiln the temperature of the polluted soil is now quickly raised to the desired temperature.

Instead of using the second kiln for heating the preheated soil to a higher temperature and simultaneously using the heat energy present in the vapours and gases liberated from the soil in the first kiln it is alternatively possible to achieve the object of the invention in a second aspect in that soil leaving the first kiln after treatment therein is taken to a third kiln, within which only said soil is heated to a considerably higher temperature, whilst the combustion of the vapours leaving the first kiln is exclusively fed into the second after-burning kiln and that the soil treated in the third kiln is taken to the first kiln at a location, such that the temperature of the soil in this first kiln, by being mixed with the soil of higher temperature fed into the first kiln after treatment in the third kiln is raised to the temperature required in the said first kiln to evaporate the toxic substances present in the freshly introduced polluted soil.

In this process three kilns are used, one for heating the soil to a temperature of say 250°C (the first kiln), one for the treatment of the gases and vapours liberated in the first kiln by subjecting said gases and vapours to the action of a burner in the second kiln, and one for heating the soil to a higher temperature (the third kiln).

If one is dealing with soil containing only contaminants which evaporate at the relatively low temperature (250°C), it will be adequate to use the known process. However, if the soil contains heavier contaminants, then the process according to the invention is used.

In practice, one will come up against varying soil compositions as far as pollution is concerned. One can then use the two processes in turn, and in this case it is important that according to the invention the soil coming out of the first kiln and going to the second or third kiln can be stored in the interim, in order to be able to discharge in purified form the slightly polluted soil which has been raised to temperature, for example using the heat from the soil coming from the second kiln, in which case the contents of the temporary store, for example a silo which is preferably insulated, decrease.

If one then has to deal again with heavily polluted soil, the process according to the invention is used with interim storage, in other words, the silo is filled with the soil coming from the first rotary kiln, from which soil is conveyed to the second or third kiln as required.

When soil is heated to a high temperature in the second or third kiln, there would be a liberation of vapours which are inadequately broken down, despite the high temperature therein.

According to a preferred embodiment of the invention, it is possible to subject these vapours or gases to after-burning, where the temperature is even higher. This after-burning can take place in a separate or fourth kiln, but it preferably takes place by conveying to the second kiln the gases liberated during the heating of soil to a high temperature in the third kiln.

The invention also relates to an apparatus for carrying out the process of the invention which apparatus comprises a first kiln of the rotary type having an inlet for polluted soil and an outlet for treated soil, a burner and a discharge conduit for discharging vapours and gases liberated from the soil treated in said first kiln, a second kiln, conduit means for feeding the vapours and gases from the first kiln into the said second kiln and means for burning the vapours and gases fed into it from the first kiln, said first kiln having a front section and a rear section, said front section having a heat exchanging wall, the interior of which being connecting by conduit means to the exhaust of the second kiln, which apparatus (as known from DE—A—3216771) can be characterized according to the invention according to the first aspect in that the outlet of the rear section of the first kiln has a connection to the second kiln with means for feeding treated soil from the first kiln into the second kiln, said second kiln having means for feeding soil treated in said second kiln into the first kiln at the entrance of the rear section of the first kiln.

Said known apparatus according to the invention according to the second aspect alternatively can be characterised in that the outlet of the rear section of the first kiln has a connection to a third kiln with means for feeding soil from the first kiln into the third kiln, said third kiln having a means for heating the soil fed into it, said third kiln having means for feeding soil treated in it into the first kiln at the entrance of the rear section of the first kiln, whilst the second kiln is exclusively used for burning vapours or gases leaving the first kiln and/ or the third kiln.

In other words a single kiln, the second kiln, can be used for heating the still polluted soil delivered by the first kiln as well as for treating the vapours and gases which leave the first kiln in case a combination of said two functions makes sense from the point of view of the energy balance, whereas according to the invention it is also possible to split said two functions and use one kiln (the third kiln) for heating the still polluted soil of the first kiln to a higher temperature whilst the vapours and gases leaving the first kiln can be treated in a separate kiln which then functions in the same way as the second kiln used in the known process and apparatus.

In that case the exhausts of second and third kiln can be combined for preheating purposes in the first kiln, but it is possible as well that the exhaust of the third kiln enters the second kiln to be treated simultaneously with the gases and vapours coming from the first kiln.

In all kilns energy has to be supplied.

The kilns for heating the preheated soil to a higher temperature preferably are of the fluid bed type.

It is observed that from FR—A—2369505 a method and apparatus are known with a first kiln for burning waste materials, including polluted soil and with a second kiln and gases liberated in the first kiln can be fed into the second kiln and ashes leaving the first kiln can be fed into the second kiln, whilst materials from the second kiln can be refed into the first kiln.

Herewith the gases which are generated by incomplete combustion and pyrolyses in the first kiln are used to supply energy for different causes which as to take place in the second kiln.

The toxic substances of polluted soil form only about 1% by weight of the soil. This small amount cannot deliver energy to another process. Moreover, this other process is not the right process for further raising the temperature of soil already treated in the first kiln to the temperature sufficient to transfer the toxic gases into non-toxic gases by burning at higher temperature.

The invention will now be explained in greater detail with reference to the drawings.

Figure 1 is a diagrammatical sketch of an apparatus according to the invention.

Figure 2 is a variant of Figure 1.

Figure 3 is a variant of Figure 2.

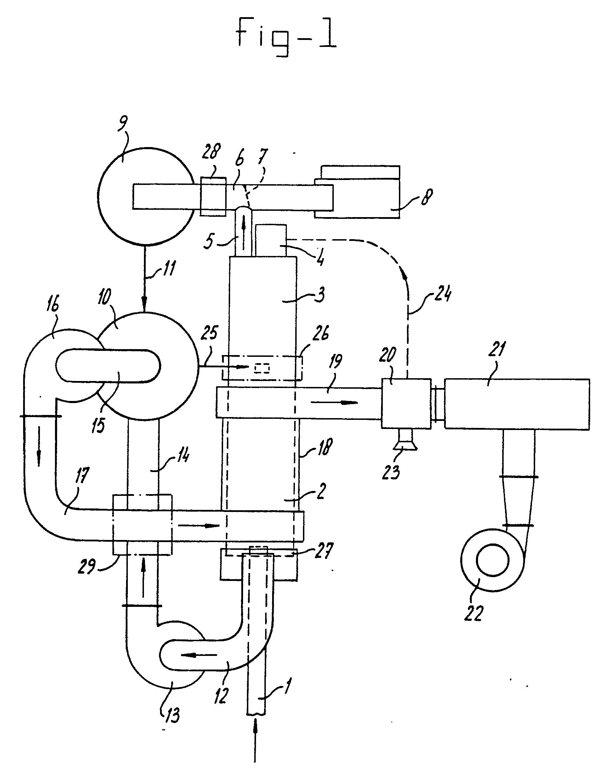

Figure 1 shows a rotary kiln with a front section 2 and a rear section 3, said rotary kiln being able to rotate in the known manner by means not shown, about its longitudinal axis, and being designed in such a way that soil fed into it moves in the longitudinal direction through the drum, e.g. due to a sloping arrangement of said drum and/or helical blades on the inside wall of the drum.

At 1 a conveyor is shown by means of which the infeed of the soil to be treated takes place.

At the opposite end of the rotary kiln a burner 4, e.g. an oil burner has been shown by means of which the interior of the kiln is heated in counterflow with the direction of movement of the soil through the rotary kiln.

The soil emerging from the rear section 3 of the rotary kiln passes via a conveyor chute 5 to a distributor device 6 which, depending on the setting of the valve 7, conveys the soil emerging from the rotary kiln either to a conditioning device 8 or to a storage silo 9.

At 10 there is a fluidized bed kiln to which soil may be conveyed by means of a conveyor 11 (not shown in detail) from the silo 9. This silo 9 preferably is insulated to avoid heat losses.

The rotary kiln 2, 3 has a discharge pipe 12 for hot gases and vapours liberated from the soil which vapours and gases pass through the pipe 12 and a cyclone dust collector 13 and then through the pipe 14 enter the kiln 10 and are burned there. The gases and vapours from the rotary kiln thereby produce part of the energy needed to heat the soil conveyed from the silo 9 to the kiln 10 to a temperature of 800 to 1000°C.

Gases leaving the kiln 10 pass through the pipe 15 and a cyclone dust collector 16 and through the pipe 17 into the inlet section or front section 2 of the rotary kiln. Said pipe 17 is not directly connected to the interior of said front section 2 but is connected to the jacket or pipe system 18 surrounding the front section. Due to indirect heat exchange the inner wall of the front section 2 of the rotary kiln is heated and this heat is transferred to the cold soil fed in by the conveyor 1.

Said jacket or pipe system has an exhaust in the form of the pipe 19 which enters a heat exchanger 20 and a dust collector 21 from which it is fed by means of a fan 22 into a chimney. The heat exchanger 20 has an inlet 23 for air which flows through pipe 24 to the burner 4 and if necessary to the kiln system 10, so that these receive preheated air.

The infeed of soil from the kiln system 10 to the rotary kiln 2, 3 is schematically illustrated by the line 25. This infeed can take place by means of a compartment which is situated between the front section 2 and rear section 3 and which is schematically indicated at 26 and can consist of a stationary ring with a top filling opening, provided that the rotary kiln is designed in such a way that conveyance of the soil over the stationary ring is ensured.

The infeed can, however, also take place at the stationary front plate 27 by means of a conveyor projecting into the drum and of sufficient length to deposit the soil at a correct point in the kiln.

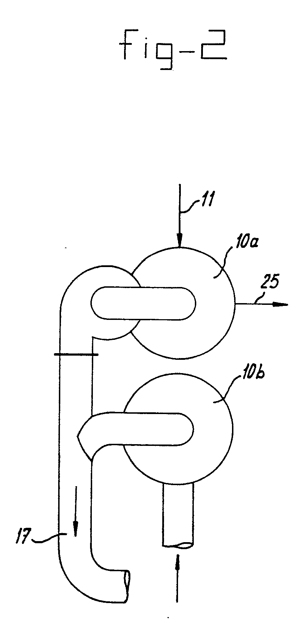

Instead of the fluidized bed kiln system 10, shown in Figure 1, it is also possible to use two kilns 10a and 10b as shown in Figure 2. In said figure the kiln 10a is a fluidized bed kiln heating the soil fed into it to a temperature of 800 to 1000°C. The gases and vapours leaving the first kiln 2, 3 do not need a fluidized bed kiln and can be burned in an ordinary chamber kiln 10b. This has the further advantage that soil cleaned in the fluid bed kiln 10a cannot be polluted by components present in the gases which leave the first kiln and which resist any kind of after burning. The gases leaving the two kilns 10a and 10b are combined and fed via pipe 17 to the heat exchanging section 18 of the first kiln 2.

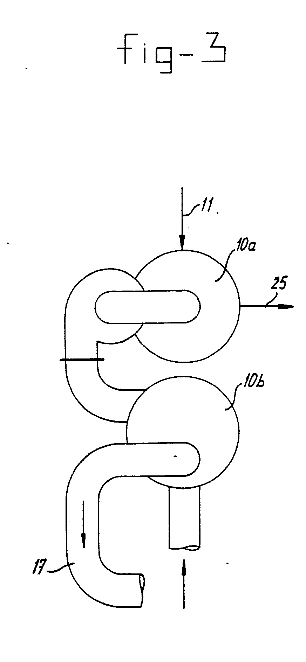

The variant shown in Figure 3 discloses the possibility that vapours or gases coming from the fluidized bed kiln 10a still contain a certain amount of contaminants which have not been destroyed. According to Figure 3 they are fed into the chamber kiln 10b in which contaminants such as dioxins which require higher temperatures and the temperatures mentioned for the fluid bed kiln.

According to Figure 3 these vapours or gases are now conveyed to the kiln 10b, which is known per se, and are raised to a higher temperature following which they are discharged via the pipe 17.

Example:

Soil polluted with, for example, high-molecular polycyclic aromatic compounds is dug up after ground water has been removed as far as possible by drainage. Following sieving for the removal of coarse components such as gravel, the soil is conveyed uniformly to and conducted through the rotary kiln 2, 3 and heated to 250°C or more, for example 450°C.

On leaving the drum 2, 3, the soil passes through a control valve 7 and a sieve such as the sieve 28 for separation of granular material which is larger than 20 mm and is temporarily stored in the silo 9.

When the silo is full, one proceeds at the infeed side of the drum in the front section 2 to feed in soil which is contaminated with for example, high molecular polycyclic aromatic compounds.

At the same time, one starts to feed in soil from the silo 9 to the fluidised bed kiln 10 or 10a.

When the soil has been heated therein to, say 800°C, this highly heated soil is uniformly discharged and taken via a feed device 25, 26 to the transition area between the indirectly preheated section 2 of the rotary kiln and the directly heated rear section 3 of the drum.

Here, mixing takes place with the already partially preheated, still contaminated soil, which can have a temperature of, for example, 100°C there. Through the mixing with the correct quantity of highly heated soil from the kiln 10, the desired end temperature of approx. 250°C can be achieved.

The soil now leaving the rotary kiln 2, 3 can be taken to a mixing or conditioning device 8, after resetting of the valve 7, where is is cooled and moistened through the infeed of water.

As soon as the silo 9 is almost empty, one switches over again to the infeed of soil polluted with high-boiling contaminants, which are then taken again to the intermediate silo 9.

All gases liberated pass through the fluidised bed kiln 10 or through the chamber kiln 10b and thereafter pass through heat exchangers and cyclone dust collectors and/or filters before discharge to the chimney takes place.

At 29 there is a schematic illustration of a heat exchanger, by means of which heat from the combustion gases from the kiln 10 or 10a and 10b can be transferred to the gases or vapours coming out of the rotary kiln 2, 3 and going to the kiln 10 or 10b to be burned there, said gases or vapours therefore reaching the kiln 10 or 10b at a higher temperature due to the heat transfer.

**Claims**

1. Process exclusively for cleaning soil polluted with toxic substances by heating said soil in a first treatment kiln (2, 3) of the rotary type to a temperature which is high enough to evaporate at least part of the toxic substances, however, such that pyrolysis is substantially avoided, the resultant vapours subsequently being burnt in a second kiln (10), whilst the heat energy fed into the second kiln (10) and obtained during the after-burning process in said second kiln (10) is used by heat exchange (17, 18) for preheating the cold soil fed into the first kiln (2, 3) as well as for preheating (20) the combustion air (24) fed into the kilns, while the soil leaving the first kiln (2, 3) can be cooled and conditioned, in particular moistened, characterized in that soil leaving the first kiln (2, 3) after treatment therein is taken to the second kiln (10) within which said soil is heated to a considerably higher temperature, partly by using the combustion heat by after-burning the vapours (12, 14) leaving the first kiln (2, 3) and that the soil treated in this second kiln (10) is taken to the first kiln (3) at a location (25, 26) such that the temperature of the soil in this first kiln (3) by being mixed with the soil of higher temperature fed into the first kiln (3) after treatment in the second kiln (10) is raised to the temperature required in the said first kiln (3) to evaporate the toxic substances present in the freshly introduced polluted soil.

2. Process exclusively for cleaning soil polluted with toxic substances by heating said soil in a first kiln (2, 3) of the rotary type to a temperature which is high enough to evaporate at least part of the toxic substances, however such that pyrolysis is substantially avoided, the resultant vapours subsequently being burnt in a second kiln (10b), whilst the heat energy fed into the second kiln (10b) and obtained during the after-burning process in said second kiln (10b) is used by heat exchange (17, 18) for preheating the cold soil fed into the first kiln (2, 3) as well as for preheating (20) the combustion air (24) fed into the kilns, while the soil leaving the first kiln (2, 3) can be cooled and conditioned, in particular moistened, characterized in that soil leaving the first kiln (3) after treatment therein is taken to a third kiln (10a) within which only said soil is heated to a considerably higher temperature, whilst the combustion of the vapours leaving the first kiln (2, 3) is exclusively fed into the second after-burning kiln (10b) and that the soil treated in the third kiln (10a) is taken to the first kiln (3) at a location (25, 26), such that the temperature of the soil in this first kiln (3), by being mixed with the soil of higher temperature fed into the first kiln (3) after treatment in the third kiln (10a) is raised to the temperature required in the said first kiln (3) to evaporate the toxic substances present in the freshly introduced polluted soil.

3. Process as claimed in claim 1 or 2, characterized in that the gases liberated during heating at the said higher temperature in the second (10) or third kiln (10a) respectively are subjected to an after-burning process.

4. Process as claimed in claim 1, 2 or 3, characterized in that the soil taken from the exit (5) of the first kiln and to be fed into the second (10) or third kiln (10a) respectively are stored in the interim in an insulated silo (9).

5. Process as claimed in claim 1, 2, 3 or 4, in which heating in the first kiln (2, 3) takes place at a temperaturre of apporoximately 250°C, characterized in that heating in the second (10) or third kiln (10a) respectively takes place at a temperature from 800 to 1000°C.

6. Apparatus for carrying out the process according to claim 1, comprising a first kiln (2, 3) of the rotary type having an inlet (1) for polluted soil and an outlet (5) for treated soil, a burner (4) and a discharge conduit (12) for discharging vapours and gases liberated from the soil treated in said first kiln (2, 3), a second kiln (10), conduit means (12, 14) for feeding the vapours and gases from the first kiln (2, 3) into the said second kiln (10) and means for burning the vapours and gases fed into it from the first kiln (2, 3), said first kiln (2, 3) having a front section (2) and a rear section (3), said front section (2) having a heat exchanging wall (18), the interior of which being connecting by conduit means (17) to the exhaust of the second kiln, characterized in that the outlet of the rear section (3) of the first kiln (2, 3) has a connection (6, 11) to the second kiln (10) with means for feeding treated soil from the first kiln (2, 3) into the second kiln (10), said second kiln (10) having means (25) for feeding soil treated in said second kiln into the first kiln at the entrance (26) of the rear section (3) of the first kiln.

7. Apparatus for carrying out the process as claimed in claim 2, comprising a first kiln (2, 3) of the rotary type having an inlet (1) for polluted soil and an outlet (5) for treated soil, a burner (4) and a discharge conduit (12) for discharging vapours and gases liberated from the soil treated in said first kiln (2, 3), a second kiln (10b), conduit means (12, 14) for feeding the vapours and gases from the first kiln (2, 3) into the said second kiln (10b) and means for burning the vapours and gases fed into it from the first kiln (2, 3), said first kiln (2, 3) having a front section (2) and a rear section (3), said front section (2) having a heat exchanging wall (18), the interior of which being connecting by conduit means (17) to the exhaust of the second kiln, characterized in that the outlet of the rear section (3) of the first kiln (2, 3) has a connection (6, 11) to a third kiln (10a) with means for feeding soil from the first kiln (2, 3) into the third kiln (10a), said third kiln (10a) having means for heating the soil fed into it, said third kiln (10a) having means (25) for feeding soil treated in it into the first kiln at the entrance of the rear section (3) of the first kiln, whilst the second kiln (10b) is exclusively used for burning vapours or gases leaving the first kiln (2, 3) and/or the third kiln (10a).

8. Apparatus as claimed in claim 6 or 7, characterized in that the connection (6, 11) for the conveyance of soil from the discharging end (5) of the first kiln towards the second kiln (10) or third kiln (10a) respectively is provided with an insulated silo (9).

9. Apparatus as claimed in claim 6, 7 or 8, characterized in that the discharge end (5) of the first kiln (2, 3) is provided with a switch which in one position guides the soil leaving the first kiln (2, 3) towards the second or third kiln respectively and in the other position towards a conditioning device (8).

10. Apparatus as claimed in claim 6, 7, 8 or 9, characterized in that the second kiln (10) or the third kiln (10a) respectively is a fluid bed kiln.

11. Apparatus as claimed in claim 7, 8 or 9, characterized in that the exhausts of the second kiln and third kiln are interconnected.

12. Apparatus as claimed in claim 7, 8 or 9, characterized in that the exhaust of the third kiln (10a) is connected to the infeed of the second kiln (10b).

13. Apparatus as claimed in claim 11 or 12, characterized in that the exhaust (17) of the second kiln (10, 10b) and/or third kiln (10a) passes a heat exchanger (29) in the conduit (14) between the exhaust of the first kiln (2, 3) and the second kiln (10, 10b).

**Patentansprüche**

1. Verfahren ausschließlich zum Reinigen von mit toxischen Substanzen verunreinigtem Erdreich durch Erwärmen des Erdreichs in einem ersten Dreh-Behandlungsofen (2, 3) auf eine Temperatur, die ausreichend hoch ist, um wenigstens einen Teil der toxischen Substanzen zu verdampfen, wobei jedoch eine Pyrolyse im wesentlichen vermieden wird, und anschließendes Verbrennen der resultierenden Dämpfe in einen zweiten Ofen (10), während die dem zweiten Ofen (10) zugeführte und während der Nachverbrennung im zweiten Ofen (10) erzeugte Wärmeenergie mittels Wärmeübertragung (17, 18) zum Vorwärmen des in den ersten Ofen (2, 3) aufgegebenen Erdreichs sowie zum Vorwärmen (20) der den Öfen zugeführten Verbrennungsluft (24) genutzt wird, während das den ersten Ofen (2, 3) verlassende Erdreich abgekühlt und aufbereitet, insbesondere befeuchtet werden kann, dadurch gekennzeichnet, daß den ersten Ofen (2, 3) nach Behandlung in diesem verlassendes Erdreich zum zweiten Ofen (10) verbracht wird, in dem dieses Erdreich unter teilweiser Nutzung der durch Nachverbrennung der aus dem ersten Ofen (2, 3) austretenden Dämpfe (12, 14) erzeugten Verbrennungswärme auf eine wesentlich höhere Temperatur erwärmt wird, und daß das in diesem zweiten Ofen (10) behandelte Erdreich zu dem ersten Ofen (3) an einer solchen Stelle (25, 26) so verbracht wird, daß die Temperatur des Erdreichs in diesem ersten Ofen (3) durch Vermischen mit dem Erdreich höherer Temperatur, das in den ersten Ofen (3) nach Behandlung im zweiten Ofen (10) eingebracht wird, auf die Temperatur erhöht wird, die im ersten Ofen (3) zum Verdampfen der in dem frisch eingebrachten verunreinigten Erdreich enthaltenen toxischen Substanzen benötigt wird.

2. Verfahren ausschließlich zum Reinigen von mit toxischen Substanzen verunreinigtem Erdreich durch Erwärmen des Erdreichs in einem ersten Dreh-Behandlungsofen (2, 3) auf eine Temperatur, die ausreichend hoch ist, um wenigstens einen Teil der toxischen Substanzen zu verdampfen, wobei jedoch eine Pyrolyse im wesentlichen vermieden wird, und anschließendes Verbrennen der resultierenden Dämpfe in einem zweiten Ofen (10b), während die dem zweiten Ofen (10b) zugeführte und während der Nachverbrennung im zweiten Ofen (10b) erzeugte Wärmeenergie mittels Wärmeübertragung (17, 18) zum Vorwärmen des in den ersten Ofen (2, 3) aufgegebenen Erdreichs sowie zum Vorwärmen (20) der den Öfen zugeführten Verbrennungsluft (24) genutzt wird, während das den ersten Ofen (2, 3) verlassende Erdreich abgekühlt und aufbereitet, insbesondere befeuchtet werden kann, dadurch gekennzeichnet, daß den ersten Ofen (3) nach Behandlung in diesem verlassendes Erdreich zu einem dritten Ofen (10a) verbracht wird, in dem nur dieses Erdreich auf eine wesentlich höhere Temperatur erwärmt wird, während die Verbrennungswärme der den ersten Ofen (2, 3) verlassenden Dämpfe ausschließlich in den zweiten Nachbrennofen (10b) eingeleitet wird, und daß das im dritten Ofen (10a) behandelte Erdreich zum ersten Ofen (3) an einer solchen Stelle (25, 26) verbracht wird, daß die Temperatur des Erdreichs in diesem ersten Ofen (3) durch Vermischen mit dem Erdreich höherer Temperatur, das in den ersten Ofen (3) nach Behandlung im dritten Ofen (10a) eingebracht wird, auf die Temperatur erhöht wird, die im ersten Ofen (3) zum Verdampfen der in dem frisch eingebrachten verunreinigten Erdreich vorhandenen toxischen Substanzen benötigt wird.

3. Verfahren nach Anspruch 1 oder 2, dadurch gekennzeichnet, daß die während des Erwärmens auf die höhere Temperatur im zweiten (10) bzw. im dritten Ofen (10a) freigesezten Gase einer Nachverbrennung unterworfen werden.

4. Verfahren nach einem der Ansprüche 1, 2 oder 3, dadurch gekennzeichnet, daß das aus dem Auslaß (5) des ersten Ofens entnommene Erdreich, das in den zweiten (10) bzw. den dritten Ofen (10a) einzubringen ist, in einem isolierten Silo (9) zwischengelagert wird.

5. Verfahren nach einem der Ansprüche 1, 2, 3 oder 4, wobei das Erwärmen im ersten Ofen (2, 3) auf eine Temperatur von ungefähr 250°C erfolgt, dadurch gekennzeichnet, daß das Erwärmen im zweiten (10) bzw. im dritten Ofen (10a) auf eine Temperatur von 800—1000°C erfolgt.

6. Einrichtung zur Durchführung des Verfahrens nach Anspruch 1, umfassend einen ersten Drehofen (2, 3) mit einem Einlaß (1) für verunreinigtes Erdreich und einem Auslaß (5) für behandeltes Erdreich, einen Brenner (4) und eine Auslaßleitung (12) zum Ableiten von Dämpfen und Gasen, die aus dem im ersten Ofen (2, 3) behandelten Erdreich freigesetzt werden, einen zweiten Ofen (10), Leitungen (12, 14) zum Leiten der Dämpfe und Gase aus dem ersten Ofen (2, 3) in den zweiten Ofen (10) und Mittel zum Verbrennen der diesem aus dem ersten Ofen (2, 3) zugeführten Dämpfe und Gase, wobei der erste Ofen (2, 3) einen Vorderabschnitt (2) und einen Hinterabschnitt (3) hat und der Vorderabschnitt (2) eine Wärmeübertragungswand (18) aufweist, deren Inneres über eine Leitung (17) mit der Abluft des zweiten Ofens verbunden ist, dadurch gekennzeichnet, daß der Auslaß des Hinterabschnitts (3) des ersten Ofens (2, 3) eine Verbindung (6, 11) zum zweiten Ofen (10) mit Mitteln zum Fördern von behandeltem Erdreich aus dem ersten Ofen (2, 3) in den zweiten Ofen (10) aufweist, wobei der zweite Ofen (10) Mittel (25) zum Fördern von im zweiten Ofen behandeltem Erdreich in den ersten Ofen am Eingang (26) des Hinterabschnitts (3) des ersten Ofens aufweist.

7. Einrichtung zur Durchführung des Verfahrens nach Anspruch 2, umfassend einen ersten Drehofen (2, 3) mit einem Einlaß (1) für verunreinigtes Erdreich und einem Auslaß (5) für behandeltes Erdreich, einen Brenner (4) und eine Auslaßleitung (12) zum Ableiten von Dämpfen und Gasen, die aus dem im ersten Ofen (2, 3) behandelten Erdreich freigesetzt werden, einen zweiten Ofen (10b), Leitungen (12, 14) zum Leiten der Dämpfe und Gase aus dem ersten Ofen (2, 3) in den zweiten Ofen (10b) und Mittel zum Verbrennen der diesem aus dem ersten Ofen (2, 3) zugeführten Dämpfe und Gase, wobei der erste Ofen (2, 3) einen Vorderabschnitt (2) und einen Hinterabschnitt (3) hat und der Verderabschnitt (2) eine Wärmeübertragungswand (18) aufweist, deren Inneres über eine Leitung (17) mit der Abluft des zweiten Ofens verbunden ist, dadurch gekennzeichnet, daß der Auslaß des Hinterabschnitts (3) des ersten Ofens (2, 3) eine Verbindung (6, 11) mit einem dritten Ofen (10a) mit Mitteln zum Fördern von Erdreich aus dem ersten Ofen (2, 3) in den dritten Ofen (10a) aufweist, wobei der dritte Ofen (10a) Mittel zum Erwärmen des ihm zugeführten Erdreichs hat und der dritte Ofen (10a) Mittel (25) zum Fördern von in ihm behandeltem Erdreich in den ersten Ofen am Eintritt des Hinterabschnitts (3) des ersten Ofens aufweist, während der zweite Ofen (10b) ausschließlich zum Verbrennen von aus dem ersten Ofen (2, 3) und/oder dem dritten Ofen (10a) austretenden Dämpfen oder Gasen dient.

8. Einrichtung nach Anspruch 6 oder 7, dadurch gekennzeichnet, daß die Verbindung (6, 11) zum Fördern des Erdreichs vom Austrittsende (5) des ersten Ofens in Richtung zum zweiten Ofen (10b) bzw. zum dritten Ofen (10a) mit einem isolierten Silo (9) versehen ist.

9. Einrichtung nach den Ansprüchen 6, 7 oder 8, dadurch gekennzeichnet, daß das Austrittsende (5) des ersten Ofens (2, 3) mit einem Schalter versehen ist, der das den ersten Ofen (2, 3) verlassende Erdreich in seiner einen Stellung zum zweiten bzw. zum dritten Ofen und in seiner anderen Stellung zu einer Aufbereitungseinheit (8) leitet.

10. Einrichtung nach den Ansprüchen 6, 7, 8 oder 9, dadurch gekennzeichnet, daß der zweite Ofen (10) bzw. der dritte Ofen (10a) ein Wirbelschichtofen ist.

11. Einrichtung nach den Ansprüchen 7, 8 oder 9, dadurch gekennzeichnet, daß die Abluftströme des zweiten und des dritten Ofens miteinander verbunden sind.

12. Einrichtung nach den Ansprüchen 7, 8 oder 9, dadurch gekennzeichnet, daß die Abluft des dritten Ofens (10a) mit dem Einlaß des zweiten Ofens (10b) verbunden ist.

13. Einrichtung nach Anspruch 11 oder 12, dadurch gekennzeichnet, daß die Abluft (17) des zweiten Ofens (10, 10b) und/oder des dritten Ofens (10a) einen Wärmetauscher (29) in der zwischen der Abluft des ersten Ofens (2, 3) und des zweiten Ofens (10, 10b) befindlichen Leitung (14) passiert.

**Revendications**

1. Procédé exclusivement pour nettoyer un sol pollué par des substances toxiques en chauffant ledit sol dans un premier four de traitement (2, 3) de type rotatif à une température suffisamment élevée pour vaporiser au moins une partie des substances toxiques, néanmoins telle que la pyrolyse soit sensiblement évitée, les vapeurs obtenues étant ensuite brûlées dans un second four (10), cependant que l'énergie thermique introduite dans le second four (10) et obtenue pendant le processus de post-combustion dans le second four (10) est utilisée par échange de chaleur (17, 18) pour préchauffer le sol froid introduit dans le premier four (2, 3), ainsi que pour le préchauffage (20) de l'air de combustion (24) introduit dans les fours, tandis que le sol quittant le premier four (2, 3) peut être refroidi et conditionné, en particulier humidifié, caractérisé en ce que le sol quittant le premier four (2, 3) après y avoir été traité passe dans le second four (10) dans lequel ledit sol est chauffé à une température considérablement plus élevé, partiellement en utilisant la chaleur de combustion en soumettant à une post-combustion les vapeurs (12, 14) quittant le premier four (2, 3) et en ce que le sol traité dans ce second four (10) passe dans le premier four (3) à en endroit (25, 26), de façon que la température du sol dans ce premier four (3), grâce à un mélange avec le sol de température plus élevée introduit dans le premier four (3) après le traitement dans le troisième four (10a), est portée à la température nécesaire dans le premier four (3) pour vaporiser les substances toxiques présentes dans le sol pollué nouvellement introduit.

2. Procédé exclusivement pour nettoyer un sol pollué par des substances toxiques en chauffant ledit sol dans un premier four (2, 3) de type rotatif à une température suffisamment élevée pour vaporiser au moins une partie des substances toxiques, néanmoins telle que la pyrolyse soit sensiblement évitée, les vapeurs obtenues étant ensuite brûlées dans un second four (10b), cependant que l'énergie thermique introduite dans le second four (10b) et obtenue pendant le processus de post-combustion dans le second four (10b) est utilisée par échange de chaleur (17, 18) pour préchauffer le sol froid introduit dans le premier four (2, 3), ainsi que pour le préchauffage (20) de l'air de combustion (24) introduit dans les fours, tandis que le sol quittant le premier four (2, 3) peut être refroidi et conditionné, en particulier humidifié, caractérisé en ce que le sol quittant le premier four (3) après y avoir été traité passe dans un troisième four (10a) dans lequel seul ledit sol est chauffé à une température considérablement plus élevée, cependant que les vapeurs de combustion quittant le premier four (2, 3) sont exclusivement introduites dans le second four de post-combustion (10b) et en ce que le sol traité dans le troisième four (10a) passe dans le premier four (3) à un endroit (25, 26), de façon que la température du sol dans ce premier four (3), grâce à un mélange avec le sol de température plus élevée introduit dans le premier four (3) après le traitement dans le troisième four (10a), est portée à la température nécessaire dans le premier four (3) pour vaporiser les substances toxiques présentes dans le sol pollué nouvellement introduit.

3. Procédé selon la revendication 1 ou 2, caractérisé en ce que les gaz libérés pendant le chauffage à ladite température plus élevée respectivement dans le second (10) ou le troisième four (10a) sont soumis à un processus de post-combustion.

4. Procédé selon la revendication 1, 2 ou 3, caractérisé en ce que les sols pris à la sortie (5) du premier four pour être introduits respectivement dans le second (10) ou le troisième four (10a) sont stockés temporairement dans un silo isolé (9).

5. Procédé selon la revendication 1, 2, 3 ou 4, dans lequel le chauffage dans le premier four (2, 3) s'effectue à une température d'environ 250°C, caractérisé en ce que le chauffage respectivement dans le second (10) ou le troisième four (10a) s'effectue à une température de 800 à 1000°C.

6. Installation pour mettre en oeuvre le procédé selon la revendication 1, comprenant un premier four (2, 3) de type rotatif ayant une entrée (1) pour le sol pollué et une sortie (5) pour le sol traité, un brûleur (4) et un conduit d'évacuation (12) pour évacuer les vapeurs et les gaz qui se dégagent du sol traité dans le premier four (2, 3), un second four (10), des conduits (12, 14) pour faire passer les vapeurs et les gaz du premier four (2, 3) au second four (10) et un moyen pour brûler les vapeurs et les gaz introduits dans celui-ci depuis le premier four (2, 3), ledit premier four (2, 3) ayant une partie antérieure (2) et une partie postérieure (3), ladite partie antérieure (2) ayant une paroi (18) pour échanges de chaleur, dont l'intérieur est relié par une conduite (17) à l'échappement du second four, caractérisée en ce que la sortie de la partie postérieure (3) du premier four (2, 3) a une liaison (6, 11) avec le second four (10) avec un moyen pour acheminer le sol traité du premier four (2, 3) jusque dans le second four (10), le second four (10) ayant un moyen (25) pour faire passer le sol traité du second four au premier four à l'entrée (26) de la partie postérieure (3) du premier four.

7. Installation pour mettre en oeuvre le procédé selon la revendication 2, comprenant un premier four (2, 3) de type rotatif ayant une entrée (1) pour le sol pollué et une sortie (5) pour le sol traité, un brûleur (4) et un conduit d'évacuation (12) pour évacuer les vapeurs et les gaz qui se dégagent du sol traité dans le premier four (2, 3), un second four (10b), des conduits (12, 14) pour faire passer les vapeurs et les gaz du premier four (2, 3) au second four (10b) et un moyen pour brûler les vapeurs et les gaz introduits dans celui-ci depuis le premier four (2, 3), ledit premier four (2, 3) ayant une partie antérieure (2) et une partie postérieure (3), ladite partie antérieure (2) ayant une paroi (18) pour échanges de chaleur, dont l'intérieur est relié par une conduite (17) à l'échappement du second four, caractérisée en ce que la sortie de la partie postérieure (3) du premier four (2, 3) a une liaison (6, 11) avec un troisième four (10a) avec un moyen pour acheminer le sol depuis le premier four (2, 3) jusque dans le troisième four (10a), ledit troisième four (10a) ayant un moyen (25) pour faire passer le sol qui y est traité dans le premier four à l'entrée de la partie postérieure (3) du premier four, cependant que le second four (10b) sert exclusivement à brûler les vapeurs ou les gaz quittant le premier four (2, 3) et/ou le troisième four (10a).

8. Installation selon la revendication 6 ou 7, caractérisée en ce que la liaison (6, 11) pour l'acheminement du sol depuis l'extrémité d'évacuation (5) du premier four respectivement vers le second four (10) ou le troisième four (10a) est pourvue d'un silo isolé (9).

9. Installation selon la revendication 6, 7 ou 8, caractérisée en ce que l'extrémité d'évacuation (5) du premier four (2, 3) est pourvue d'un commutateur qui, dans une position, guide le sol quittant le premier four (2, 3) respectivement vers le second ou le troisième four et, dans l'autre position, vers un dispositif de conditionnement (8).

10. Installation selon la revendication 6, 7, 8 ou 9, caractérisée en ce que le second four (10) ou le troisième four (10a) est respectivement un four à lit fluidisé.

11. Installation selon la revendication 7, 8 ou 9, caractérisée en ce que les échappements du second four et du troisième four sont reliés entre eux.

12. Installation selon la revendication 7, 8 ou 9, caractérisée en ce que l'échappement du troisième four (10a) est relié à l'entrée du second four (10b).

13. Installation selon la revendication 11 ou 12, caractérisée en ce que l'échappement (17) du second four (10, 10b) et/ou du troisième four (10a) traverse un échangeur de chaleur (29) dans le conduit (14) entre l'échappement du premier four (2, 3) et le second four (10, 10b).

# Fig-1

# Fig-2

0 155 022

Fig-3